# EUROPÄISCHE PATENTSCHRIFT

(11) **EP 2 338 795 B1**
(45) Veröffentlichungstag und Bekanntmachung des Hinweises auf die Patenterteilung: **10.10.2012**
(21) Anmeldenummer: 10015348.5
(22) Anmeldetag: 06.12.2010
(51) Int. Cl.: B65B 5/12, B65B 35/36, B25J 5/02, B25J 9/00

(54) **Vorrichtung zum Umsetzen von Produkten**
Device for transferring products
Dispositif pour transférer des produits

(30) Priorität: 23.12.2009 DE 102009060271
(43) Veröffentlichungstag der Anmeldung: 29.06.2011
(73) Patentinhaber: Weber Maschinenbau GmbH Breidenbach, 35236 Breidenbach (DE)
(72) Erfinder:
(74) Vertreter: Manitz, Gerhart

(56) Entgegenhaltungen:
- EP-A1- 1 803 665
- DE-A1- 3 817 117
- DE-A1- 4 445 563
- US-A- 5 438 647
- US-A1- 2010 089 208

## Beschreibung

Die vorliegende Erfindung betrifft eine Vorrichtung zum Umsetzen von Produkten aus einem Aufnahmebereich in einen Ablagebereich, mit einer Fördereinrichtung, um die Produkte in einer Förderrichtung nacheinander in den Aufnahmebereich zu fördern, und zumindest einem ersten und einem zweiten Roboter, die in Förderrichtung gesehen zueinander beabstandet in der Umgebung der Fördereinrichtung angeordnet sind und die jeweils eine Roboterbasis und einen relativ zu der Roboterbasis bewegbaren Endeffektor zum Aufnehmen und Ablegen der Produkte umfassen.

Vorrichtungen der genannten Art kommen beispielsweise in der Lebensmittelindustrie zum Einsatz, um Lebensmittelprodukte wie Fleisch, Wurst oder Käse von der Fördereinrichtung auf eine weitere Fördereinrichtung umzusetzen, zu sortieren oder in eine Verpackung einzubringen. Zu diesem Zweck werden die Endeffektoren jeweils mittels einer Roboterkinematik relativ zu ihrer Roboterbasis bewegt. Bei den Endeffektoren kann es sich um beliebige Werkzeuge handeln, mittels welchen die entsprechenden Produkte aufgenommen, transportiert und abgesetzt werden können. Beispielsweise sind Systeme mit zwei die Produkte untergreifenden Schaufelblättern oder mit einer Vakuumsaugvorrichtung bekannt.

Die Roboter können in Form von Robotern mit Deltakinematik, die auch als Parallelroboter bezeichnet werden, als sogenannte "Pick and Place"-Roboter ausgebildet sein und z.B. Produkte oder Produktportionen von dem Ausgangsförderer einer Schneidvorrichtung in eine Verpackungsmaschine umsetzen.

Das Vorsehen von zwei oder mehr in Förderrichtung beabstandeten, parallel arbeitenden Robotern erhöht die Gesamtgeschwindigkeit des Umsetzens und somit die Anzahl von pro Zeiteinheit handzuhabenden Portionen oder Produkten. Bei Umstellungen hinsichtlich der Produktart, der Portionsform und/oder der Fördergeschwindigkeit kann es jedoch zu Fehlanpassungen der einzelnen Betriebsparameter kommen, so dass die Leistungsfähigkeit der Umsetzvorrichtung unter Umständen nicht optimal ausgenutzt wird.

In der EP 1 803 665 A1 ist ein Aufnahmekopf für eine Produktumsetzvorrichtung offenbart, der eine lineare Anordnung von mehreren einzelnen Produktgreifern umfasst.

Die DE 38 17 117 A1 offenbart eine Handhabungsvorrichtung zum Umsetzen von Werkstücken zwischen zwei gegenüberliegenden Blechpressen offenbart.

Die WO 2008/107420 A1 offenbart einen Werkstückmanipulator für eine automatisierte Drehbank, welche eine Ladestation, eine Entladestation sowie eine dazwischen angeordnete Aufspannvorrichtung für die zu bearbeitenden Werkstücke umfasst. Der Werkstückmanipulator umfasst zwei separate Greifzangen, welche voneinander unabhängig verschiebbar an einer horizontalen Gleitschiene gelagert sind. Aufgrund der unabhängigen Verschiebbarkeit der Greifzangen kann deren Abstand geändert werden, um Werkstücke unterschiedlicher Größe besser handhaben zu können.

Es ist eine Aufgabe der Erfindung, mit einem vertretbaren konstruktiven Aufwand die Effizienz einer Produktumsetzvorrichtung der gattungsgemäßen Art zu verbessern.

Die Aufgabe wird durch eine Vorrichtung mit den Merkmalen des Anspruchs 1 gelöst.

Erfindungsgemäß ist der Abstand zwischen der Roboterbasis des ersten Roboters und der Roboterbasis des zweiten Roboters einstellbar. Die Erfindung beruht auf der Erkenntnis, dass zum Erreichen der maximal möglichen Leistungsiahigkeit der Umsetzvorrichtung eine Anpassung des Abstands der Roboter zueinander an die Betriebsparameter der jeweiligen Anwendung erforderlich ist. Die erfindungsgemäße Vorrichtung ermöglicht es, die Entfernung zwischen den Robotern auf einen Wert einzustellen, bei welchem sich eine maximale Umsetzleistung ergibt. Somit können Umstellungen in Bezug auf die umzusetzenden Produkte bzw. Produktportionen und/oder die Fördergeschwindigkeit vorgenommen werden, ohne eine unnötig hohe Einbuße der Leistung der Umsetzvorrichtung befürchten zu müssen.

Der Abstand der Roboterbasis des ersten Roboters und der Roboterbasis des zweiten Roboters kann in Förderrichtung gesehen und/oder quer zur Förderrichtung gesehen einstellbar sein. Der Abstand der Roboter in Förderrichtung kann somit an den Abstand der umzusetzenden Produkte oder Produktportionen in Förderrichtung gesehen angepasst werden. Eine Einstellbarkeit des Abstands der Roboter quer zur Förderrichtung ermöglicht eine bessere Anpassung des Arbeitsbereichs von seitlich versetzt zueinander angeordneten Robotern, welche z.B. bei Förderung von Produkten in mehreren Reihen parallel zur Förderrichtung zum Einsatz kommen können.

Gemäß einer Ausführungsform ist eine Steuereinrichtung vorgesehen, um den Abstand zwischen der Roboterbasis des ersten Roboters und der Roboterbasis des zweiten Roboters in Abhängigkeit von dem Abstand zwischen durch die Fördereinrichtung geförderten Produkten einzustellen. Dabei kann je nach Anwendung der Abstand zwischen zwei aufeinanderfolgend geförderten Produkten als Bezugswert herangezogen werden oder der Abstand zwischen einem geförderten Produkt und einem beliebigen später nachfolgenden Produkt. Bei einer Änderung des Produktabstands kann die Steuereinrichtung also dafür sorgen, dass automatisch auch der Roboterabstand entsprechend geändert wird.

Insbesondere kann eine Steuereinrichtung vorgesehen sein, um das Verhältnis des Abstands zwischen geförderten Produkten zu dem Abstand zwischen der Roboterbasis des ersten Roboters und der Roboterbasis des zweiten Roboters auf einen vorgebbaren Optimalwert einzustellen. Dem liegt die Erkenntnis zugrunde, dass das Verhältnis von Produktabstand zu Roboterabstand einen bedeutenden Einfluss auf die Umsetzleistung hat und bei einem bestimmten Wert eine maximale Umsetzleistung erreicht wird. Die Steuereinrichtung stellt somit also sicher, dass keine Umsetzleistung "verschenkt" wird.

Gemäß einer weiteren Ausführungsform ist die Vorrichtung einer Produktbearbeitungsvorrichtung, z.B. einer Schneidvorrichtung, nachgeordnet, und eine Steuereinrichtung stellt den Abstand zwischen der Roboterbasis des ersten Roboters und der Roboterbasis des zweiten Roboters in Abhängigkeit von Betriebsparametern der Produktbearbeitungsvorrichtung und/oder der Fördereinrichtung automatisch ein. Die Steuereinrichtung kann zu diesem Zweck in geeigneter Weise mit einer Steuereinrichtung der Produktbearbeitungsvorrichtung und/oder der Fördereinrichtung kommunizieren. Somit ist es beispielsweise möglich, vor Beginn des Umsetzbetriebs die jeweils relevanten Parameterwerte in Bezug auf die Bearbeitungs- bzw. Fördergeschwindigkeit, aus denen sich der Produktabstand ergibt, an die Steuereinrichtung der Roboter zu melden, woraufhin diese die Einstellung des entsprechenden optimalen Roboterabstands bewirkt.

Gemäß einer weiteren Ausführungsform ist eine Steuereinrichtung vorgesehen, um den Abstand zwischen der Roboterbasis des ersten Roboters und der Roboterbasis des zweiten Roboters auf ein ganzzahliges Vielfaches des Abstands zwischen aufeinander folgenden geförderten Produkten einzustellen. Es hat sich gezeigt, dass ein ganzzahliges Verhältnis zwischen Produktabstand und Roboterabstand hinsichtlich der Umsetzleistung besonders vorteilhaft ist.

Eine weitere Ausführungsform der Erfindung sieht vor, dass die Roboterbasis des ersten Roboters und die Roboterbasis des zweiten Roboters jeweils motorisch verstellbar an einem ortsfesten Trägerrahmen der Vorrichtung angebracht sind. Aufgrund des hierfür nötigen vergleichsweise geringen konstruktiven Aufwands kann eine entsprechende Umsetzvorrichtung relativ kostengünstig bereitgestellt werden bzw. ein bestehendes System auch nachträglich leicht nachgerüstet werden.

Die Verbindungslinie zwischen dem Zentrum der Roboterbasis des ersten Roboters und dem Zentrum der Roboterbasis des zweiten Roboters kann parallel zu der Förderrichtung verlaufen. Als Zentrum der Roboterbasis kann der geometrische Mittelpunkt oder der Schwerpunkt angesehen werden. Die Roboter sind bei dieser Ausführungsform also nacheinander entlang der Förderstrecke angeordnet. Alternativ ist auch eine Anordnung mit zueinander seitlich versetzten Roboterbasen denkbar, wie sie vorstehend erwähnt wurde.

Gemäß einer weiteren Ausführungsform können mehr als zwei Roboter vorgesehen und die Abstände zwischen allen benachbarten Roboterbasen einstellbar sein. Vorzugsweise ist eine Steuereinrichtung oder eine Zwangskopplung vorgesehen, um die Abstände zwischen den Roboterbasen aller Roboter auf den Wert des Abstandes zwischen der Roboterbasis des ersten Roboters und der Roboterbasis des zweiten Roboters einzustellen. Hierdurch lässt sich zwischen allen Robotern der gleiche optimale Abstand einstellen und eine maximale Umsetzleistung erzielen. Eine individuelle Anpassung der einzelnen Abstände ist im Normalfall weder sinnvoll noch erforderlich, da bei gleichbleibenden Betriebsbedingungen auch die Produktabstände gleich bleiben.

Gemäß einer weiteren Ausführungsform ist eine Verpackungsvorrichtung in dem Ablagebereich angeordnet, in welche die umgesetzten Produkte bzw. Portionen direkt eingelegt werden. Alternativ kann das Produkt bzw. die Portion aber auch auf eine weitere Fördereinrichtung umgesetzt werden.

Vorzugsweise sind die Roboter nach dem Delta-Prinzip arbeitende Roboter. Derartige Delta-Roboter oder Parallelroboter erfordern nur geringe bewegte Massen und sind für "Pick and Place"-Aufgaben besonders geeignet.

Weitere vorteilhafte Ausbildungen der Erfindung sind den Unteransprüchen, der Beschreibung und der Zeichnung zu entnehmen.

Die Erfindung wird im Folgenden beispielhaft unter Bezugnahme auf die beigefügte Zeichnung beschrieben.

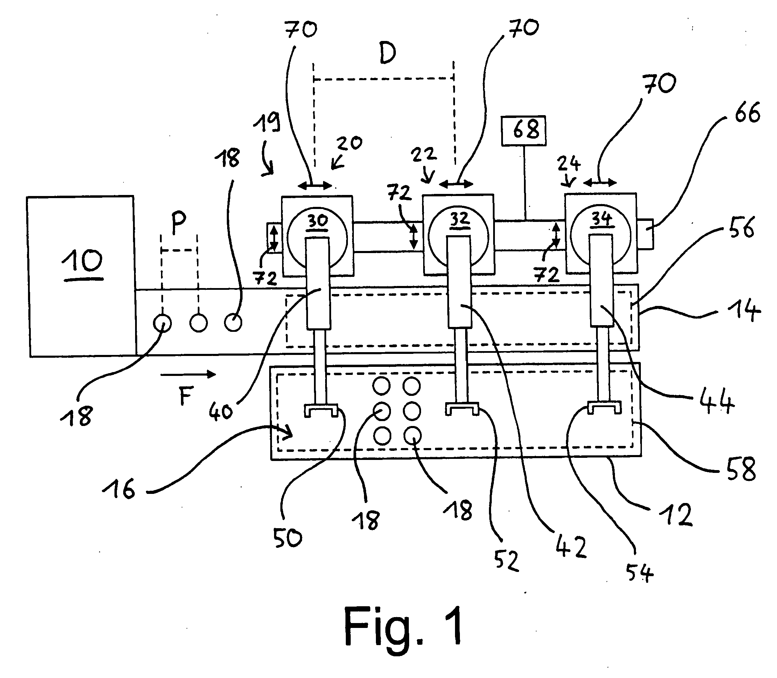

- Fig. 1: zeigt eine vereinfachte Draufsicht auf eine erfindungsgemäße Vorrichtung zur Verarbeitung von Lebensmittelprodukten, welche eine Anordnung aus drei Robotern zum Umsetzen der Lebensmittelprodukte umfasst.

In Fig. 1 ist eine Schneidlinie mit einem Hochleistungs-Slicer 10 zum Aufschneiden von Lebensmittelprodukten und mit einer dem Slicer 10 nachgeordneten Verpackungsmaschine 12 zur Erstellung verkaufsfertiger Portionspackungen dargestellt. Der Slicer 10 ist dazu ausgebildet, mit hoher Geschwindigkeit Scheiben von einem Produktlaib, wie z.B. einem Wurst-, Fleisch- oder Käselaib, abzutrennen. Die abgetrennten Produktscheiben fallen auf einen Bandförderer 14 und werden, gegebenenfalls in Form von Produktportionen 18, die sich aus mehreren Scheiben zusammensetzen, durch diesen entlang einer Förderrichtung F transportiert.

Zum Umsetzen der Produktportionen 18 von dem Bandförderer 14 auf eine in einem Ablagebereich 58 befindliche Produktablage 16 der Verpackungsmaschine 12 ist eine Umsetzvorrichtung 19 mit einer Anordnung aus einem ersten Roboter 20, einem zweiten Roboter 22 und einem dritten Roboter 24 vorgesehen. Im dargestellten Beispiel handelt es sich bei den Robotern 20, 22, 24 um "Pick and Place"-Roboter mit Delta-Kinematik.

Der erste Roboter 20 umfasst eine Basis 30, eine beweglich an dieser angebrachte Kinematik 40 sowie einen an die Kinematik 40 angekoppelten Endeffektor 50. Der zweite Roboter 22 und der dritte Roboter 24 sind analog zu dem ersten Roboter 20 aufgebaut und umfassen dementsprechend jeweils eine Basis 32, 34, eine Kinematik 42, 44 sowie einen Endeffektor 52, 54. Im Folgenden wird zur Vereinfachung die Basis 30 des ersten Roboters 20 als "erste Roboterbasis" bezeichnet, die Basis 32 des zweiten Roboters 22 wird als "zweite Roboterbasis" bezeichnet und die Basis 34 des dritten Roboters 24 wird als "dritte Roboterbasis" bezeichnet.

Die Produktportionen 18 werden durch den Bandförderer 14 in einen Aufnahmebereich 56 der Roboter 20, 22, 24 transportiert, durch die Endeffektoren 50, 52, 54 der Roboter 20, 22, 24 aufgenommen und in die Verpackungsmaschine 12 umgesetzt. Dabei können je nach Anwendung Sortiervorgänge oder das Positionieren der Produktportionen 18 in der Verpackungsmaschine 12 zu einem Formatsatz als Zusatzaufgaben durchgeführt werden.

Wie aus Fig. 1 hervorgeht, sind die erste, die zweite und die dritte Roboterbasis 30, 32, 34 jeweils motorisch verfahrbar an einem ortsfesten Trägerrahmen 66 der Umsetzvorrichtung 19 angebracht. Die Verstellung der Roboterbasen 30, 32, 34 wird durch eine Steuereinrichtung 68 bewerkstelligt, welche in eine Steuereinrichtung zur Steuerung der Bewegung der Roboterkinematiken 40, 42, 44 integriert sein kann.

Durch entsprechend gesteuertes motorisches Verfahren der Roboterbasen 30, 32, 34 relativ zu dem Trägerrahmen 66 kann der Abstand zwischen der ersten Roboterbasis 30 und der zweiten Roboterbasis 32 bzw. der Abstand zwischen der zweiten Roboterbasis 32 und der dritten Roboterbasis 34 in Förderrichtung F gesehen variiert werden, was in der Figur durch Doppelpfeile 70 dargestellt ist. Die Steuereinrichtung 68 stellt im dargestellten Ausführungsbeispiel die Abstände zwischen den jeweils benachbarten Roboterbasen 30, 32, 34 stets auf einen gemeinsamen Wert D ein, welcher im Folgenden auch als "Roboterabstand" bezeichnet wird.

Der Roboterabstand D wird dabei in Abhängigkeit von dem Abstand zwischen aufeinander folgenden, durch den ersten Bandförderer 14 geförderten Produktportionen 18 - im Folgenden auch Produktabstand P genannt - eingestellt. Die Einstellung erfolgt dabei derart, dass das Verhältnis des Roboterabstands D zu dem Produktabstand P einem vorgebbaren Optimalwert entspricht, welcher zu einer maximalen Leistung der Umsetzvorrichtung 19 führt.

Da der Produktabstand P sowohl von der Schneidgeschwindigkeit des Slicers 10 als auch von der Fördergeschwindigkeit des Bandförderers 14 abhängt, werden diese Parameter an die Steuereinrichtung 68 übermittelt, damit diese aus den empfangenen Daten den Produktabstand P ermittelt. Grundsätzlich ist es auch möglich, den Produktabstand P nicht anhand der genannten Parameter zu ermitteln, sondern mittels geeigneter Sensoren erfassen.

Aus dem Produktabstand P bestimmt die Steuereinrichtung 68 in Kenntnis des optimalen Abstandsverhältnisses einen optimalen Roboterabstand D. Zur Einstellung des optimalen Roboterabstands D werden die Roboterbasen 30, 32, 34 dann in die jeweils gewünschte Position gefahren.

Das Verhältnis zwischen dem eingestellten Roboterabstand D und dem Produktabstand P ist vorzugsweise ganzzahlig. Rein beispielhaft kann der Roboterabstand D 800 mm und der Produktabstand P 200 mm betragen.

Zusätzlich kann bei der Umsetzvorrichtung 19 der Abstand zwischen der ersten Roboterbasis 30 und der zweiten Roboterbasis 32 sowie der Abstand zwischen der zweiten Roboterbasis 32 und der dritten Roboterbasis 34 quer zur Förderrichtung F eingestellt werden, was in Fig. 1 durch Doppelpfeile 72 dargestellt ist.

Die Gesamtzahl der Roboter 20, 22, 24 richtet sich nach der jeweils geforderten Umsetzleistung. Lediglich beispielhaft sind hier drei Roboter gezeigt.

Da das Verhältnis des Roboterabstands D zu dem Produktabstand P stets auf dem hinsichtlich der Umsetzleistung optimalen Wert gehalten wird, ist eine hohe Effizienz der Umsetzvorrichtung gewährleistet. Das Umsetzpotenzial wird voll ausgeschöpft, ohne dass sich der Bediener der Anlage eigens darum kümmern muss.

### Bezugszeichenliste

- 10: Slicer
- 12: Verpackungsmaschine
- 14: Bandförderer
- 16: Produktauflage
- 18: Produktportion
- 19: Umsetzvorrichtung
- 20: erster Roboter
- 22: zweiter Roboter
- 24: dritter Roboter
- 30: erste Basis
- 32: zweite Basis
- 34: dritte Basis
- 40: erste Kinematik
- 42: zweite Kinematik
- 44: dritte Kinematik
- 50: erster Endeffektor
- 52: zweiter Endeffektor
- 54: dritter Endeffektor
- 56: Aufnahmebereich
- 58: Ablagebereich
- 66: Trägerrahmen
- 68: Steuereinrichtung
- 70: Verstellung in Förderrichtung
- 72: Verstellung quer zur Förderrichtung
- F: Förderrichtung
- D: Roboterabstand
- P: Produktabstand

## Patentansprüche

1. Vorrichtung (19) zum Umsetzen von Produkten (18), z.B. Lebensmittelprodukten, aus einem Aufnahmebereich (56) in einen Ablagebereich (58), mit
einer Fördereinrichtung (14), um die Produkte (18) in einer Förderrichtung (F) nacheinander in den Aufnahmebereich (56) zu fördern, und
zumindest einem ersten und einem zweiten Roboter (20, 22), die in Förderrichtung (F) gesehen zueinander beabstandet in der Umgebung der Fördereinrichtung (14) angeordnet sind und die jeweils eine Roboterbasis (30, 32) und einen relativ zu der Roboterbasis (30, 32) bewegbaren Endeffektor (50, 52) zum Aufnehmen und Ablegen der Produkte (18) umfassen,
**dadurch gekennzeichnet, dass**
der Abstand (D) zwischen der Roboterbasis (30) des ersten Roboters (20) und der Roboterbasis (32) des zweiten Roboters (22) einstellbar ist.

2. Vorrichtung nach Anspruch 1,
**dadurch gekennzeichnet, dass**
der Abstand (D) der Roboterbasis (30) des ersten Roboters (20) und der Roboterbasis (32) des zweiten Roboters (22) in Förderrichtung (F) gesehen und/oder quer zur Förderrichtung (F) gesehen einstellbar ist.

3. Vorrichtung nach Anspruch 1 oder 2,
**dadurch gekennzeichnet, dass**
eine Steuereinrichtung (68) vorgesehen ist, um den Abstand (D) zwischen der Roboterbasis (30) des ersten Roboters (20) und der Roboterbasis (32) des zweiten Roboters (22) in Abhängigkeit von dem Abstand (P) zwischen durch die Fördereinrichtung (14) geförderten Produkten (18) einzustellen.

4. Vorrichtung nach zumindest einem der vorstehenden Ansprüche,
**dadurch gekennzeichnet, dass**
eine Steuereinrichtung (68) vorgesehen ist, um das Verhältnis des Abstands (P) zwischen geförderten Produkten (18) zu dem Abstand (D) zwischen der Roboterbasis (30) des ersten Roboters (20) und der Roboterbasis (32) des zweiten Roboters (22) auf einen vorgebbaren Optimalwert einzustellen.

5. Vorrichtung nach zumindest einem der vorstehenden Ansprüche,
**dadurch gekennzeichnet, dass**
die Vorrichtung (19) einer Produktbearbeitungsvorrichtung (10), z.B. einer Schneidvorrichtung, nachgeordnet ist und eine Steuereinrichtung (68) den Abstand (D) zwischen der Roboterbasis (30) des ersten Roboters (20) und der Roboterbasis (32) des zweiten Roboters (22) in Abhängigkeit von Betriebsparametern der Produktbearbeitungsvorrichtung (10) und/oder der Fördereinrichtung (14) automatisch einstellt.

6. Vorrichtung nach zumindest einem der vorstehenden Ansprüche,
**dadurch gekennzeichnet, dass**
eine Steuereinrichtung (68) vorgesehen ist, um den Abstand (D) zwischen der Roboterbasis (30) des ersten Roboters (20) und der Roboterbasis (32) des zweiten Roboters (22) auf ein ganzzahliges Vielfaches des Abstands (P) zwischen aufeinander folgenden geförderten Produkten (18) einzustellen.

7. Vorrichtung nach zumindest einem der vorstehenden Ansprüche,
**dadurch gekennzeichnet, dass**
die Roboterbasis (30) des ersten Roboters (20) und die Roboterbasis (32) des zweiten Roboters (22) jeweils motorisch verstellbar an einem ortsfesten Trägerrahmen (66) der Vorrichtung (19) angebracht sind.

8. Vorrichtung nach zumindest einem der vorstehenden Ansprüche,
**dadurch gekennzeichnet, dass**
die Verbindungslinie zwischen dem Zentrum der Roboterbasis (30) des ersten Roboters (20) und dem Zentrum der Roboterbasis (32) des zweiten Roboters (22) parallel zu der Förderrichtung (F) verläuft.

9. Vorrichtung nach zumindest einem der vorstehenden Ansprüche,
**dadurch gekennzeichnet, dass**
mehr als zwei Roboter (20, 22, 24) vorgesehen sind und die Abstände (D) zwischen den Roboterbasen (30, 32, 34) aller Roboter (20, 22, 24) einstellbar sind.

10. Vorrichtung nach Anspruch 9,
**dadurch gekennzeichnet, dass**
eine Steuereinrichtung (68) oder eine Zwangskopplung vorgesehen ist, um die Abstände (D) zwischen allen Roboterbasen (30, 32, 34) auf den Wert des Abstands zwischen der Roboterbasis (30) des ersten Roboters (20) und der Roboterbasis (32) des zweiten Roboters (22) einzustellen.

11. Vorrichtung nach zumindest einem der vorstehenden Ansprüche,
**dadurch gekennzeichnet, dass**
eine Verpackungsvorrichtung (12) in dem Ablagebereich (58) angeordnet ist.

12. Vorrichtung nach zumindest einem der vorstehenden Ansprüche,
**dadurch gekennzeichnet, dass**
die Roboter (20, 22, 24) nach dem Delta-Prinzip arbeitende Roboter sind.

## Claims

1. An apparatus (19) for transferring products (18), e.g. food products, from a pick-up region (56) into a placement region (58), comprising a conveying device (14) to convey the products (18) into the pick-up region (56) after one another in a conveying direction (F); and
at least one first and one second robot (20, 22) which are arranged spaced apart from one another when viewed in the conveying direction (F) in the environment of the conveying device (14) and which each include a robot base (30, 32) and an end effector (50, 52) movable relative to the robot base (30, 32) for picking up and placing down the products (18),
**characterized in that**
the spacing (D) between the robot base (30) of the first robot (20) and the robot base (32) of the second robot (22) can be set.

2. An apparatus in accordance with claim 1,
**characterized in that**
the spacing (D) of the robot base (30) of the first robot (20) and of the robot base (32) of the second robot (22) can be set when viewed in the conveying direction (F) and/or when viewed transversely to the conveying direction (F).

3. An apparatus in accordance with claim 1 or claim 2,
**characterized in that**
a control device (68) is provided to set the spacing (D) between the robot base (30) of the first robot (20) and the robot base (32) of the second robot (22) in dependence on the spacing (P) between products (18) conveyed by the conveying device (14).

4. An apparatus in accordance with at least one of the preceding claims,
**characterized in that**
a control device (68) is provided to set the relationship of the spacing (P) between conveyed products (18) to the spacing (D) between the robot base (30) of the first robot (20) and the robot base (32) of the second robot (22) to a presettable ideal value.

5. An apparatus in accordance with at least one of the preceding claims,
**characterized in that**
the apparatus (19) is disposed after a product processing apparatus (10), e.g. a cutting apparatus, and a control device (68) automatically sets the spacing (D) between the robot base (30) of the first robot (20) and the robot base (32) of the second robot (22) in dependence on operating parameters of the product processing apparatus (10) and/or of the conveying device (14).

6. An apparatus in accordance with at least one of the preceding claims,
**characterized in that**
a control device (68) is provided to set the spacing (D) between the robot base (30) of the first robot (20) and the robot base (32) of the second robot (22) to a whole-number multiple of the spacing (P) between conveyed products (18) following one another.

7. An apparatus in accordance with at least one of the preceding claims,
**characterized in that**
the robot base (30) of the first robot (20) and the robot base (32) of the second robot (22) are each attached to a stationary support frame (66) of the apparatus (19) in a manner adjustable by a motor.

8. An apparatus in accordance with at least one of the preceding claims,
**characterized in that**
the connection line between the center of the robot base (30) of the first robot (20) and the center of the robot base (32) of the second robot (22) extends parallel to the conveying direction (F).

9. An apparatus in accordance with at least one of the preceding claims,
**characterized in that**
more than two robots (20, 22, 24) are provided and the spacings (D) between the robot bases (30, 32, 34) of all robots (20, 22, 24) can be set.

10. An apparatus in accordance with claim 9,
**characterized in that**
a control device (68) or a positive coupling is provided to set the spacings (D) between all the robot bases (30, 32, 34) to the value of the spacing between the robot base (30) of the first robot (20) and the robot base (32) of the second robot (22).

11. An apparatus in accordance with at least one of the preceding claims,
**characterized in that**
a packaging apparatus (12) is arranged in the placement region (58).

12. An apparatus in accordance with at least one of the preceding claims,
**characterized in that**
the robots (20, 22, 24) are robots working in accordance with the delta principle.

## Revendications

1. Dispositif (19) pour transférer des produits (18), par exemple des produits alimentaires, depuis une zone d'enlèvement (56) jusque dans une zone de déposition (58), comprenant
un dispositif de convoyage (14) pour convoyer les produits (18) dans une direction de convoyage (F) les uns après les autres dans la zone d'enlèvement (56), et
au moins un premier et un second robot (20, 22) qui sont agencés dans les environs du dispositif de convoyage (14) et sont écartés l'un de l'autre vus en direction de convoyage (F), et qui comprennent chacun une base de robot (30, 32) et un actionneur terminal (50, 52) déplaçable par rapport à la base de robot (30, 32) pour enlever et déposer les produits (18),
**caractérisé en ce que**
l'écartement (D) entre la base de robot (30) du premier robot (20) et la base de robot (32) du second robot (22) est réglable.

2. Dispositif selon la revendication 1,
**caractérisé en ce que** l'écartement (D) de la base de robot (30) du premier robot (20) et la base de robot (32) du second robot (22) vu dans la direction de convoyage (F) et/ou perpendiculairement à la direction de convoyage (F) est réglable.

3. Dispositif selon la revendication 1 ou 2,
**caractérisé en ce qu'**il est prévu un dispositif de commande (68) afin de régler l'écartement (D) entre la base de robot (30) du premier robot (20) et la base de robot (32) du second robot (22) en fonction de la distance (P) entre des produits (18) convoyés par le dispositif de convoyage (14).

4. Dispositif selon l'une au moins des revendications précédentes,
**caractérisé en ce qu'**il est prévu un dispositif de commande (68) afin de régler le rapport de la distance (P) entre des produits convoyés (18) sur l'écartement (D) entre la base de robot (30) du premier robot (20) et la base de robot (32) du second robot (22) à une valeur optimale prédéterminée.

5. Dispositif selon l'une au moins des revendications précédentes,
**caractérisé en ce que** le dispositif (19) est disposé en aval d'un appareil de traitement de produit (10), par exemple un appareil de coupe, et un dispositif de commande (68) règle automatiquement l'écartement (D) entre la base de robot (30) premier robot (20) et la base de robot (32) du second robot (22) en fonction de paramètres de fonctionnement de l'appareil de traitement de produit (10) et/ou du dispositif de convoyage (14).

6. Dispositif selon l'une au moins des revendications précédentes,
**caractérisé en ce qu'**il est prévu un dispositif de commande (68) afin de régler l'écartement (D) entre la base de robot (30) du premier robot (20) et la base de robot (32) du second robot (22) à un multiple entier de la distance (P) entre des produits convoyés (18) qui se suivent mutuellement.

7. Dispositif selon l'une au moins des revendications précédentes,
**caractérisé en ce que** la base de robot (30) du premier robot (20) et la base de robot (32) du second robot (22) sont montées chacune avec possibilité de déplacement motorisé sur un châssis porteur stationnaire (66) du dispositif (19).

8. Dispositif selon l'une au moins des revendications précédentes,
**caractérisé en ce que** la ligne de liaison entre le centre de la base de robot (30) du premier robot (20) et le centre de la base de robot (32) du second robot (22) s'étend parallèlement à la direction de convoyage (F).

9. Dispositif selon l'une au moins des revendications précédentes,
**caractérisé en ce qu'**il est prévu plus de deux robots (20, 22, 24), et les écartements (B) entre les bases de robot (30, 32, 34) de tous les robots (20, 22, 24) sont réglables.

10. Dispositif selon la revendication 9,
**caractérisé en ce qu'**il est prévu un dispositif de commande (68) ou un accouplement forcé afin de régler les écartements (D) entre toutes les bases de robot (30, 32, 34) à la valeur de l'écartement entre la base de robot (30) du premier robot (20) et la base de robot (32) du second robot (22).

11. Dispositif selon l'une au moins des revendications précédentes,
**caractérisé en ce qu'**un dispositif d'emballage (12) est agencé dans la zone de déposition (58).

12. Dispositif selon l'une au moins des revendications précédentes,
**caractérisé en ce que** les robots (20, 22, 24) sont des robots qui fonctionnent d'après le principe dit "delta".
